# EUROPEAN PATENT APPLICATION

(11) **EP 1 985 835 A1**
(43) Date of publication of application: **29.10.2008**
(21) Application number: 07106807.6
(22) Date of filing: 24.04.2007
(51) Int. Cl.: F02M 37/00

(54) **Pressure regulator**

(71) Applicant: Delphi Technologies, Inc., Troy, MI 48007 (US)
(72) Inventor: Marx, Patrice, 54650, Saulnes (FR)
(74) Representative: Jones, Keith William

(57) **Abstract**

This invention relates to a pressure regulator which has a housing (12) enclosing a pressure activated head member (14). The pressure activated head member (14) moves between an open and a closed position when a sufficient pressure differential across the regulator is present. The regulator is also provided with an adjustment member (16) which can be moved, by a screwing action, along the longitudinal axis of the pressure regulator. Resilient means (18) for imparting a resilient force on the adjustment member (16) is also provided and this resiliently urges the pressure activated head member toward the closed position. In this way, a simple pressure regulator is provided which requires relatively compact and simple components.

## Description

The present invention relates to a pressure regulator, particularly, but not exclusively, a pressure regulator used to avoid overpressure in the fuel delivery system of an automobile.

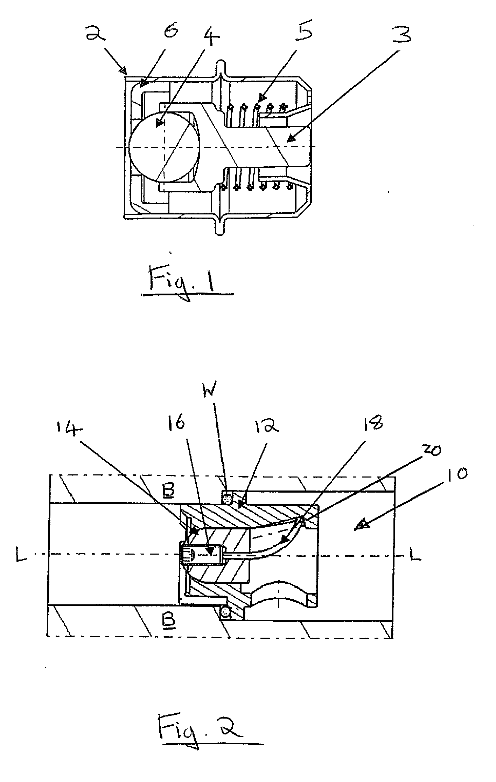

Pressure regulators are used in a variety of applications. In general, although often part of a large and complicated system, the pressure regulator itself often performs essentially the same function regardless of the application. That is, it allows fluid to pass from a first zone to a second zone when the fluid pressure in the first zone is greater than a threshold predetermined maximum. With reference to Fig. 1, this is typically achieved by providing a generally cylindrical housing 2 which encloses a cup 3, ball 4 and coiled spring 5. The cup 3 and ball 4 are held within the housing 2 under the tension of the compressed spring 5 by a cover 6 such that the ball covers an opening in one end of the housing. When fluid on the remote side of the housing 2 to the ball 4 (left hand side of Fig. 1) reaches a threshold, the coiled spring 5 will begin to compress thereby allowing the cup 3 and ball 4 to move (to the right hand side in Fig. 1) in order to allow fluid to flow through the opening, into the housing 2. The fluid will continue to flow into the housing 2 until the pressure level drops below the maximum allowed at which point the action of the spring 5 will return the ball 4 to the closed position.

A disadvantage of such arrangements is that the housing normally comprises a pair of sections which are snap-fitted together during manufacture. This makes it difficult to have any way of altering the fluid pressure at which the regulator will open. Another disadvantage is that the coiled spring, ball and cup require relatively large components and are relatively difficult to manufacture.

According to the present invention there is provided a pressure regulator comprising:-
a housing;
a pressure activated head member adapted to be actuable between an open and a closed position when a sufficient pressure differential across the housing is present;
an adjustment member movable along the longitudinal axis of the pressure regulator;
resilient means for imparting a resilient force on the adjustment member thereby to urge the pressure activated head member toward the closed position, wherein adjustment of the adjustment member varies the force exerted by the resilient means and thereby the force exerted on the head member.

Preferred features and advantages of the invention will be apparent from the following description and the claims.

Embodiments of the present invention will now be described, by way of example only, with reference to the accompanying drawings, in which:-
Fig. 1 is a transverse cross sectional view of a prior art regulator not in accordance with the present invention; and
Fig. 2 is a transverse cross sectional view of a pressure regulator according to the present invention.

Referring to Fig. 2, a pressure regulator 10 has a housing 12 installed in a nominal bore B in which the pressure is to be regulated. A washer W is provided in order to seal the annulus between the housing 12 and the bore B. A pressure activated head member 14 rests within a correspondingly shaped seat of the housing 12 and is also provided with an adjustment member 16. The adjustment member 16 and pressure activated head member 14 are urged toward the seat of the housing 12 due to a resilient force provided by the resilient member 18 which is buckled between the adjusting member 16 and a securing point 20. In this regard, the term buckled will be understood by the skilled reader to mean that the member is temporarily warped from its otherwise normal shape in order to provide resilience. In other words, once buckled there is a tendency for the material to return to it's original shape. The resilient member is restrained at one end by securing point 20 and at the other end by passing through an orifice in the rear of the head member 14 to engage the inner end surface of the adjustment member 16.

The pressure activated head member 14 has a rounded nose section and a rectangular tail section. Adjustment member 16 is positioned within an enlarged partial through bore in the head member 14 and comprises a threaded screw which co-operates with a corresponding screw thread in the inner walls of the enlarged partial through bore such that rotation of the adjustment member 16 causes it to move back and forward along the longitudinal axis L of the regulator. In this regard, the rectangular tail section of the head member ensures that the head member does not tilt as it moves along the axis L.

In use, when the bore pressure on one side of the regulator 10 (left hand side in Fig. 2) increases beyond a threshold pressure, the head member 14 will be urged toward the other side of the regulator 10. As the head member moves it lifts from its seat in the housing 12 thereby allowing fluid to flow through the regulator. Once the overpressure has been released, the resilient member 18, which by now will have been buckled further by the head member 14, urges the head member 14 back toward the closed position in order to prevent flow of fluid through the regulator.

In order to adjust the pressure at which the regulator will open to allow flow of fluid through, the closing force provided by the resilient member 18 can be easily adjusted by rotating the adjustment member. As seen in the figure, the closing force is related to the radius of curvature of the resilient member 18 such that rotating the adjustment member 16 alters the radius of curvature of the resilient member 18. Therefore if a relatively high maximum pressure is desired before the pressure regulator 10 will allow fluid to flow through it, the force provided by the resilient member 18 can be increased by screwing the adjusting member 16 further into the partial through bore whereas if a relatively low maximum pressure is desired before the pressure regulator 10 will allow fluid to flow through it, the force provided by the resilient member 18 can be decreased by screwing the adjusting member 16 further out of the partial through bore.

Modifications and improvements may be made to the foregoing without departing from the scope of the invention.

## Claims

1. A pressure regulator comprising:-
a housing (12);
a pressure activated head member (14) adapted to be actuable between an open and a closed position when a sufficient pressure differential across the housing (12) is present;
an adjustment member (16) movable along the longitudinal axis of the pressure regulator;
resilient means (18) for imparting a resilient force on the adjustment member (16) thereby to urge the pressure activated head member (14) toward the closed position, wherein adjustment of the adjustment member (14) varies the force exerted by the resilient means (18) and thereby the force exerted on the pressure activated head member (14) .

2. A pressure regulator according to claim 1, wherein the resilient means comprises an elongate resilient member (18) positioned between the adjustment member (16) and a securing point (20) on the housing (12).

3. A pressure regulator according to claim 2, wherein the elongate resilient member (18) is positioned in the housing (12) in a buckled state.

4. A pressure regulator according to any preceding claim, wherein the resilient means (18) comprises a buckled piece of wire.

5. A pressure regulator according to claim 4, wherein the adjustment member (16) comprises a threaded screw arrangement which when screwed in one direction causes the adjustment member (16) to increase the buckle of the resilient means (18) and when screwed in the opposite direction causes the adjustment member (16) to allow the buckle of the resilient means (18) to decrease.

6. A pressure regulator according to claim 5, wherein the threaded screw arrangement is provided with a flush head capable of receiving a tool suitable for adjustment of the adjustment member (16).

7. A pressure regulator according to any of claims 1 to 5, wherein the threaded screw arrangement is headless.

8. A pressure regulator according to any preceding claim, wherein the pressure activated head member (14) comprises a rounded nose section.

9. A pressure regulator according to any preceding claim, wherein the pressure activated head member (14) comprises a rectangular tail section.
